(19) Europäisches Patentamt

European Patent Office

Office européen des brevets

(11) **EP 0 968 131 B2**

(12) **NEUE EUROPÄISCHE PATENTSCHRIFT**

(45) Veröffentlichungstag und Bekanntmachung des Hinweises auf die Entscheidung über den Einspruch:
**27.12.2006 Patentblatt 2006/52**

(45) Hinweis auf die Patenterteilung:
**17.10.2001 Patentblatt 2001/42**

(21) Anmeldenummer: **98912366.6**

(22) Anmeldetag: **21.02.1998**

(51) Int Cl.:
***C01B 39/36*** (2006.01)   ***C01B 39/38*** (2006.01)
***C01B 39/40*** (2006.01)

(86) Internationale Anmeldenummer:
**PCT/EP1998/001014**

(87) Internationale Veröffentlichungsnummer:
**WO 1998/038131 (03.09.1998 Gazette 1998/35)**

(54) **VERFAHREN ZUR HERSTELLUNG VON ZEOLITHEN MIT EINEM HOHEN Si/Al-ATOMVERHÄLTNIS**

PROCESS FOR PRODUCING ZEOLITES WITH A HIGH Si/Al ATOMIC RATIO

PROCEDE DE PRODUCTION DE ZEOLITHES A HAUT RAPPORT ATOMIQUE DE Si/Al

(84) Benannte Vertragsstaaten:
**AT BE CH DE DK ES FR GB IT LI NL SE**

(30) Priorität: **27.02.1997 DE 19707994**

(43) Veröffentlichungstag der Anmeldung:
**05.01.2000 Patentblatt 2000/01**

(73) Patentinhaber: **SÜD-CHEMIE AG
80333 München (DE)**

(72) Erfinder:
 • **UNGER, Klaus, K.
 D-64342 Seeheim (DE)**
 • **HAHN, Andreas, F., K.
 D-55566 Bad Sobernheim (DE)**

(74) Vertreter: **Westendorp, Michael Oliver et al
Patentanwälte
Splanemann Reitzner
Baronetzky Westendorp
Rumfordstrasse 7
80469 München (DE)**

(56) Entgegenhaltungen:
| | |
|---|---|
| **EP-A- 0 129 239** | **EP-A- 0 150 256** |
| **EP-A- 0 402 639** | **WO-A-80/02026** |
| **WO-A-93/08124** | **WO-A-93/08125** |
| **FR-A- 2 217 408** | **US-A- 3 926 782** |
| **US-A- 4 296 083** | |

 • **DATABASE WPI Section Ch, Week 8532 Derwent Publications Ltd., London, GB; Class E33, AN 85-192584 XP002068496 & JP 60 118 624 A (AGENCY OF IND SCI & TECHNOLOGY)**
 • **PATENT ABSTRACTS OF JAPAN vol. 013, no. 069 (C-569), 16.Februar 1989 & JP 63 260809 A (TOSOH CORP), 27.Oktober 1988,**
 • **Specification sheets for Aerosil, from Degussa.**
 • **Specification sheets for N-Clear from PQ. Corporation.**
 • **Zeolites 15, p. 745 to 753,( 1995), Y. Sun et al**
 • **Z.D. Chang and A.T. Bell, Catalysis Letters 9 (1991), p. 305-316**

EP 0 968 131 B2

## EP 0 968 131 B2

**Beschreibung**

Die Erfindung betrifft ein Verfahren zur Herstellung von Zeolithen mit einem hohen Si/Al-Atomverhältnis, insbesondere von Zeolithen aus der Gruppe der Pentasile.

Zeolithe gehören zur Klasse der Alumosilicate und zeichnen sich durch ihr definiertes Porenvolumen aus. Die Struktur wird aus $[SiO_4]^{4-}$ und $[AlO_4]^{5-}$ Tetraedern aufgebaut. Das Si/Al-Atomverhältnis kann über einen weiten Bereich variiert werden. Durch den Einbau von $Al^{3+}$ in das Gitter entsteht eine negative Überschußladung, die durch Kationen (meist Alkali- oder Erdalkalimetallkationen) kompensiert wird. Nach Austausch der Kationen durch Ammoniumionen und anschließender Calcinierung erhält man die sogenannte H-Form eines Zeoliths. Dieser stellt eine starke Festkörpersäure dar und hat eine hohe Ionenumtauschfähigkeit (IUF). Weiterhin können Aluminium oder Silicium in einem Zeolith teilweise durch andere Atome, wie Bor, Eisen oder Gallium ersetzt werden, wodurch ein weites Spektrum an Materialien zugänglich ist.

Zeolithe haben als poröse Festkörper mit definierten Porenradien, einstellbarer Acidität und Hydrophobizität, hoher thermischer Stabilität und Ionenumtauschfähigkeit zahlreiche Anwendungen in der Technik gefunden, z.B. in der Petrochemie, wo z.B. Zeolithe vom Pentasiltyp in der H-Form als maßgeschneiderte Katalysatoren in Crackprozessen eingesetzt werden. Häufige Anwendungen finden Zeolithe auch als Trocknungsmittel.

Der Einsatz von Zeolithen in der heterogenen Katalyse bietet nebem dem Vorteil der leichten Entfernbarkeit und Wiedergewinnung des Katalysators, meist noch den der formselektiven Katalyse, bei der die Entstehung von Nebenprodukten stark zurückgedrängt wird.

Zeolithe wurden bisher im allgemeinen unter "hydrothermalen" Bedingungen hergestellt, wobei eine Siliciumquelle, eine Aluminiumquelle, gegebenenfalls ein organisches Templat und ein Mineralisator (z.B. Alkalihydroxide oder -fluoride bzw. HF) bei Temperaturen von mehr als 100°C unter Druck im pH-Bereich zwischen 4 und 14 umgesetzt wurden. Die hydrothermalen Synthesen von Zeolithen mit einem Si/Al-Atomverhältnis von mehr als 20, z.B. von Pentasil, wurden in Autoklaven bei Temperaturen durchgeführt, die im allgemeinen höher als 130°C, z.B. bei 180°C lagen. Tieftemperatursynthesen von Zeolithen unterhalb des Siedepunktes des Wassers waren bisher nur für aluminiumreiche Phasen, wie Zeolith X bekannt.

Die Entwicklung einer Tieftemperatursynthese von Zeolithen mit einem hohen Si/Al-Atomverhältnis ist von technischem Interesse, weil dadurch auf den Einsatz von Autoklaven verzichtet werden kann. Neben der sichereren Handhabung lassen sich durch die Erniedrigung der Reaktionstemperatur die Produktionskosten senken. Weitere Vorteile der drucklosen Tieftemperatursysthese sind: weniger Gefahrenquellen, einfacheres Arbeiten, Vereinfachung der Probenentnahme während der Synthese, Möglichkeiten zur Online-Untersuchung während der Synthese, bessere Einflußmöglichkeiten während der Synthese und exaktere Kontrolle der Reaktionstemperatur durch Entfall des Parameters Druck.

Die FR-A-22 17 408 (Beispiel 2) beschreibt ein Verfahren zur Herstellung von Zeolith ZSM-5, wobei eine Kristallisationstemperatur von 99°C verwendet wird. Allgemein sind Kristallisationstemperaturen im Bereich von 75°C bis 205°C, insbesondere von 90°C bis 110°C, angegeben.

Der Erfindung lag die Aufgabe zugrunde, ein Verfahren zur Herstellung von Zeolithen mit einem hohen Si/Al-Atomverhältnis (high silica) von 40 bis ∞, insbesondere von Zeolithen aus der Gruppe der Pentasile, bereitzustellen, welches gegenüber dem "hydrothermalen" Verfahren die vorstehend beschriebenen Vorteile bringt. Unter 'Pentasilen' versteht man erfindungsgemäß auch die Silicalite, die kein Aluminium enthalten.

Das erfindungsgemäße Verfahren wird durch Umsetzung von amorpher Polykieselsäure mit einer Quelle für Aluminiumionen und einem Templat bei Temperaturen von bis zu etwa 100°C durchgeführt und ist dadurch gekennzeichnet, daß man der Reaktionslösung Ammoniumhydroxid und/oder ein Alkalisilicat zusetzt. Hierbei stellt sich im allgemeinen ein pH-Wert im Bereich von etwa 11 bis 13, vorzugsweise von 11 bis 12, ein.

Als Alkalisilicat verwendet man vorzugsweise Natrium-Wasserglas, da dieses billiger als andere Alkalisilicate ist.

Vorzugsweise führt man die Umsetzung bei Temperaturen im Bereich von 40 bis 90°C, insbesondere von 40 bis 80°C durch, wobei die Reaktionsgeschwindigkeit bei niedrigen Temperaturen abnimmt.

Als amorphe Polykieselsäure verwendet man vorzugsweise Kieselsäure-Hydrogele oder pyrogene Kieselsäuren. Es können aber auch Fällungskieselsäuren verwendet werden.

Als Template sind im wesentlichen alle bei bekannten Zeolithsynthesen verwendeten Template geeignet. Vorzugsweise verwendet man z.B. Tetrapropylammoniumverbindungen, z.B. Tetrapropylammoniumbromid.

Vorzugsweise wählt man ein Si/Al-Atomverhältnis von mehr als 75, Insbesondere von mehr als 150.

Man kann der Reaktionslösung Impfkristalle der Reaktionsprodukte zusetzen, was insbesondere bei der Synthese in Gegenwart von Ammoniumhydroxid vorteilhaft ist,

Außerdem kann man die Reaktionslösung in Gegenwart eines Trägermaterials (z.B. glasartigen, keramischen oder metallischen Werkstoffen) konzentrieren, wobei das Reaktionsprodukt auf dem Trägermaterial abgeschieden wird und damit eine feste Bindung eingeht ("Eintrocknende Synthese"). Derartige Verbundmaterialien können als Trägerkatalysatoren verwendet werden.

Erhältlich nach einem der vorstehend beschriebenen Verfahren sind ferner Zeolithe mit einem hohen Si/Al-Atomverhältnis von 40 bis ∞, insbesondere Zeolithe aus der Gruppe der Pentasile, mit (a) einer durchschnittlichen Teilchengröße von etwa 0,3 bis 0,6μm, wobei 90Gew.-% der Teilchen im Bereich von etwa 0,1 bis 0,7μm liegen, und (b) einer Kristallinität von mehr als 95%.

Diese Parameter können wie folgt bestimmt werden:

Die durchschnittliche Teilchengröße und Teilchengrößenverteilung, sowie die Morphologie der Kristallite wurden mittels Rasterelektronenmikroskopie (REM) bestimmt, da die Morphologie von Kristalliten mit einer Teilchengröße von <1μm mit dem Lichtmikroskop nicht mehr aufgelöst werden kann.

Die Kristallinität wurde in erster Linie durch Röntgenpulverdiffraktometrie bestimmt. Hierbei wurde die Intensität der gemessenen Reflexe durch einen Vergleich mit der Intensität eines vollständig kristallinen Standards bestimmt. Hierzu setzt man die integrale Intensität eines ausgewählten Reflexes $I_{hkl}$ in Beziehung zu demselben Reflex des zu 100% kristallinen Standards:

$$\text{Röntgenkristallinität} = \frac{I_{hkl} \text{ (Probe)}}{I_{hkl} \text{ (Standard)}} \times 100\%$$

Die erfindungsgemäßen Produkte haben eine Kristallinität von mehr als 95%.

Nach der ersten Variante des erfindungsgemäßen Verfahrens ("ammoniakgestützte Synthese" wird der Reaktionslösung Ammoniumhydroxid zugesetzt. Diese Synthese zeichnet sich durch Produkte mit einer sehr einheitlichen Kristallitgrößenverteilung aus und ist in Beispiel 1 erläutert.

Beispiel 1

Zur Herstellung eines Pentasil-Zeolithen wurden in einem Becherglas 1,5g Tetrapropylammoniumbromid, 0,12 g $Al_2(SO_4)_3$-18 $H_2O$, 1,5 g $H_2O$, 5,3 g kolloidales Kieselsäuresol (Ludox® AS 40) und 0,1 g Pentasil-Impfkristalle intensiv verrührt. Die Lösung wurde in einen Teflonbecherüberführt und mit 13ml 32-%iger $NH_3$-Lösung versetzt, wobei der Teflonbecher und der Ammoniak zunächst mit Eiswasser gekühlt wurden. Dann wurde die Reaktionslösung bei 90°C 2 Wochen erhitzt. Die gebildeten Kristallite wurden abfiltriert und bei 100°C getrocknet (Ausbeute 50%), Bei den Kristalliten handelt es sich um vereinheitlichte, verzwillingte Kristalle. Daneben sind auch noch einige verwachsene Kristalle zu erkennen. Die Grundform der Kristallite ist eher quader- als stäbchenförmig. Durch Röntgenpulverdiffraktometrie konnte festgestellt werden, daß das Produkt einen Kristallinitätsgrad von 100% hatte und phasenrein war.

Nach der zweiten Variante des erfindungsgemäßen Verfahrens wird dem Reaktionsgemisch ein Alkalisilicat, vorzugsweise Wasserglas zugesetzt ("wasserglasgestützte Synthese"). Das Natriumwasserglas dient zum einen als Siliciumquelle, zum anderen läßt sich damit der pH-Wert auf weniger als 13 einstellen, da das Natriumsilicat eine gewisse Pufferwirkung hat. Diese Variante des erfindungsgemäßen Verfahrens kann ohne Verwendung von Impfkristallen durchgeführt werden; die Reaktion läßt sich allerdings durch Zusatz von Impfkristallen beschleunigen. Diese Variante ist im Beispiel 2 erläutert.

Beispiel 2

(a) In einem Becherglas wurden 2,5 g einer pyrogenen Kieselsäure (Aerosil® 200) mit einer spezifischen Oberfläche von 200m$^2$g$^{-1}$ in 30ml $H_2O$ aufgeschlämmt und unter starkem Rühren zu einer Mischung aus 0,08 g $Al_2(SO_4)_3$·18 $H_2O$, 1,5 g Tetrapropylammoniumbromid und 3,6 g Natriumwasserglas (ohne Impfkristalle) in 10 ml $H_2O$ gegeben und 15 min gerührt. Dann wurde die Suspension in einen Polypropylenbecher überführt; dieser wurde verschlossen und in einen auf 90°C vorgeheizten Ofen gestellt. Der Gefäßdeckel wurde nach Erreichen der Reaktionstemperatur wiederholt geöffnet, um Atmosphärendruck zu erreichen. Der pH-Wert blieb konstant bei 11,8. Die Aufarbeitung erfolgte durch Aufschlämmen des Niederschlags In Wasser, Abzentrifugieren und Trocken bei Raumtemperatur über Nacht im Membranpumpenvakuum. Die durchschnittliche Teilchengröße lag bei etwa 0,3μm. Der Kristallinitätsgrad betrug 100%.

Eine besondere Aufarbeitung ist dann nicht erforderlich, wenn die Reaktionslösung in Gegenwart eines Trägermaterials konzentriert wird, wobei die Reaktionslösung ganz oder zum größten Teil eingedampft wird. Im vorliegenden Fall wurde die Reaktionslösung in Gegenwart eines unglasierten Porzellankörpers eingedampft, wobei sich auf der Oberfläche des Porzellankörpers ein festhaftender Niederschlag aus zusammengewachsenen Pentasil-Kristalliten bildete.

(b) Ein zehnfach größerer Ansatz wurde bei 75°C zur Aufnahme einer Reaktionskinetik erhitzt, wobei alle 24 Stunden eine Probe entnommen wurde. Nach der Probenentnahme wurden die Proben getrocknet und bei 550°C calciniert. Von den calcinierten Proben wurden Röntgenpulverdiffraktogramme aufgenommen und mit denen eines Standards aus der ammoniakgestützten Synthese (Beispiel 1) verglichen. Nebenphasen oder amorphe Anteile waren nicht zu erkennen. Alle Proben hatten eine Kristallinität von 100%.

Da die Umsetzung in Polypropylengefäßen durchgeführt wurde, konnte das Fortschreiten der Umsetzung sehr gut verfolgt werden. Zunächst war die Reaktionsmischung eine trübe, inhomogene Flüssigkeit, die nach zwei Tagen milchig-trübewurde. Nach ungefähr drei Tagen setzte sich am Boden des Gefäßes ein honig-zäher Niederschlag ab, der in den folgenden Tagen deutlich sichtbar zunahm. Nach 10 bis 12 Tagen begann die Lösung aufzuklaren. Der pH-Wert von 11,8 blieb während der gesamten Umsetzung konstant. Die Verhältnisse bei den Umsetzungen bei verschiedenen Temperaturen sind in der nachstehenden Tabelle angegeben.

Tabelle

| Reaktionsbedingungen und Beobachtungen | | |
|---|---|---|
| Reaktionstemp. | Auftreten d. Niederschlags | Aufklaren d. Lösung |
| 40°C | nach ca. 2 Monaten | nach ca. 2 1/2 Mon. |
| 50°C | nach ca. 1 Monat | nach ca. 6 Wochen |
| 60°C | nach ca. 2 Wochen | nach ca. 4 Wochen |
| 75°C | nach ca. 3 Tagen | nach ca. 12 Tagen |
| 90°C | nach 1 Tag | nach 1 Woche |

Wie zu erwarten war, erkennt man einen deutlichen Einfluß der Reaktionstemperatur auf die Reaktionsgeschwindigkeit. Vor allem die Induktionsperiode, d.h. die Periode vom Start der Reaktion bis zum Auftreten der Trübung, wird durch die Erniedrigung der Reaktionstemperatur stark beeinflußt.

Die Induktionsperiode bei niedrigen Reaktionstemperaturen kann jedoch durch Verwendung von Impfkristallen, (z.B. den Kristalliten von Beispiel 1) verkürzt werden.

Bei den Umsetzungen fiel Pentasil-Zeolith als Aggregat von regelmäßig verzwillingten Kristalliten an. Die Größe der Kristallite lag zu 90 Gew.-% im Bereich von 0,1 bis 0,6$\mu$m, wobei die meisten Kristallite einen Durchmesser von 0,35$\mu$m hatten. Bei den REM-Aufnahmen fiel auf, daß bei einer Reaktionstemperaturvon 75°C die ersten Kristallite nach 72 Stunden zu erkennen waren. Nach 120 Stunden war die endgültige Teilchengröße erreicht, die sich bis zum Ende des Versuchs nicht mehr veränderte. Die Teilchengrößenverteilung war über den untersuchten Temperaturbereich unabhängig von der Synthesetemperatur, was durch REM-Aufnahmen bestätigt werden konnte.

Alle Proben wurden durch Röntgenpulverdiffraktometrie charakterisiert. Der Grad der Kristallinität und die Phasenreinheit wurden durch Vergleich mit dem Diffraktogramm eines nebenphasenfreien Standards bestimmt. Daneben wurde als weitere Charakterisierungsmethode die Rasterelektronenmikroskopie eingesetzt. Hierbei zeigte sich, daß der gewählte Ansatz optimal zur Darstellung von Pentasil geeignet ist, da keine Probe eine Nebenphase enthielt.

## Patentansprüche

1.  Verfahren zur Herstellung von Zeolithen mit einem Si/Al-Atomverhältnis von 40 bis ∞, Insbesondere von Zeolithen aus der Gruppe der Pentasile, durch Umsetzung von amorphen Polykieselsäuren, mit einer Quelle für Aluminiumionen und einem Templat bei Temperaturen von bis zu 100°C, **dadurch gekennzeichnet, daß** man der Reaktionslösung Ammoniumhydroxid und/oder ein Alkalisilicat zusetzt.

2.  Verfahren nach Anspruch 1, **dadurch gekennzeichnet, daß** man als Alkalisilicat Natrium-Wasserglas verwendet.

3.  Verfahren nach Anspruch 1 oder 2, **dadurch gekennzeichnet, daß** man die Umsetzung bei Temperaturen im Bereich von etwa 40-90°C durchführt.

4.  Verfahren nach einem der Ansprüche 1 bis 3, **dadurch gekennzeichnet, daß** man als amorphe Polykieselsäure ein Kieselsäure-Hydrogel oder pyrogene Kieselsäure verwendet.

5.  Verfahren nach einem der Ansprüche 1 bis 4, **dadurch gekennzeichnet, daß** man als Templat Tetrapropylammoniumbromid verwendet.

**6.** Verfahren nach einem der Ansprüche 1 bis 5, **dadurch gekennzeichnet, daß** man ein Si/Al-Atomverhältnis von mehr als etwa 75, vorzugsweise von mehr als etwa 150, wählt.

**7.** Verfahren nach einem der Ansprüche 1 bis 6, **dadurch gekennzeichnet, daß** man der Reaktionslösung Impfkristalle des Reaktionsprodukts zusetzt.

**8.** Verfahren nach einem der Ansprüche 1 bis 7, **dadurch gekennzeichnet, daß** man die Reaktionslösung in Gegenwart eines Trägermaterials konzentriert, um das Reaktionsprodukt auf dem Trägermaterial abzuscheiden.

**Claims**

**1.** A method for the preparation of zeolites with an Si/Al atomic ratio of 40 to $\infty$, in particular zeolites from the group of the pentasiles, by reacting amorphous polysilicic acids, with a source for aluminium ions and with a template at temperatures of up to 100°C, **characterised in that** ammonium hydroxide and/or an alkali silicate is added to the reaction solution.

**2.** A method according to Claim 1, **characterised in that** sodium water glass is used as the alkali silicate.

**3.** A method according to Claim 1 or 2, **characterised in that** the conversion is carried out at temperatures in the range of approximately 40-90°C.

**4.** A method according to any one of Claims 1 to 3, **characterised in that** a silicic acid hydrogel or pyrogenic silicic acid is used as the amorphous polysilicic acid.

**5.** A method according to any one of Claims 1 to 4, **characterised in that** tetrapropylammonium bromide is used as the template.

**6.** A method according to any one of Claims 1 to 5, **characterised in that** an Si/Al atomic ratio of more than approximately 75 is chosen, preferably more than approximately 150.

**7.** A method according to any one of Claims 1 to 6, **characterised in that** seed crystals of the reaction product are added to the reaction solution.

**8.** A method according to any one of Claims 1 to 7, **characterised in that** the reaction solution is concentrated in the presence of a carrier material so as to deposit the reaction product on the carrier material.

**Revendications**

**1.** Procédé de préparation de zéolites présentant un rapport en atomes Si/Al de 40 à l'infini, notamment de zéolites appartenant au groupe des pentasils, par réaction d'acides polysiliciques amorphes avec une source d'ions aluminium et une matrice, à des températures allant jusqu'à 100°C, **caractérisé en ce qu'**on ajoute à la solution réactionnelle de l'hydroxyde d'ammonium et/ou un silicate d'un métal alcalin.

**2.** Procédé selon la revendication 1, **caractérisé en ce qu'**on utilise comme silicate d'un metal alcalin du silicate de sodium.

**3.** Procédé selon la revendication 1 ou 2, **caractérisé en ce que** la réaction est mise en oeuvre à des températures comprises entre environ 40 et 90°C.

**4.** Procédé selon l'une des revendications 1 à 3, **caractérisé en ce qu'**on utilise comme acide polysilicique un hydrogel d'acide silicique ou un acide silicique pyrogène.

**5.** Procédé selon l'une des revendications 1 à 4, **caractérisé en ce qu'**on utilise comme matrice du bromure de tétrapropylammonium.

**6.** Procédé selon l'une des revendications 1 à 5, **caractérisé en ce qu'**on choisit un rapport en atomes Si/Al supérieur à environ 75 et de préférence supérieur à environ 150.

**7.** Procédé selon l'une des revendications 1 à 6, **caractérisé en ce qu'on** ajoute à la solution réactionelle des germes cristallins du produit de la réaction.

**8.** Procédé selon l'une des revendications 1 à 7, **caractérisé en ce qu'**on concentre la solution réactionnelle en présence d'un matériau support, pour déposer le produit de la réaction sur le matériau support.